# EUROPEAN PATENT APPLICATION

(11) **EP 4 534 728 A1**
(43) Date of publication of application: **09.04.2025**
(21) Application number: 23202056.0
(22) Date of filing: 06.10.2023
(51) Int. Cl.: C25B 1/04, C25B 15/08, C01B 32/05

(54) **CIRCULAR CARBON PROCESS**

(71) Applicant: BASF SE, 67056 Ludwigshafen am Rhein (DE)
(72) Inventor: MAYR, Lukas, 189773 Singapore (SG); FLICK, Dieter, 67056 Ludwigshafen am Rhein (DE); JOHANNSEN, 67056 Ludwigshafen am Rhein (DE); BOSCH, Marco, 67056 Ludwigshafen am Rhein (DE)
(74) Representative: BASF IP Association

(57) **Abstract**

The present invention relates to circular carbon process for transporting energy comprising:
a first step, wherein hydrogen is produced via water electrolysis,
a second step, wherein the hydrogen produced in the first step and granular pyrolytic carbon produced in the fourth step are reacted to hydrocarbons,
a third step, wherein the hydrocarbons produced in the second step are fed into a gas grid,
a fourth step, wherein the hydrocarbons are taken from the gas grid, and hydrocarbons are decomposed to hydrogen and granular pyrolytic carbon,
a fifth step, wherein the granular pyrolytic carbon produced in the fourth step is transported to a production site of the hydrating gasification of step two,
wherein the hydrocarbons decomposition of step four is conducted in a moving or fixed bed of solid substrates and wherein the produced granular pyrolytic carbon has a bulk density in the range of 0.5 to 1.5 g/cc and has a particle size of 0.1 mm (d10) to 10 mm (d90).

## Description

The present invention relates to circular carbon process comprising:
a first step, wherein hydrogen is produced via water electrolysis,
a second step, wherein the hydrogen produced in the first step and granular pyrolytic carbon produced in the fourth step are reacted to hydrocarbons, preferably methane,
a third step, wherein the hydrocarbons, preferably methane, produced in the second step are fed into a gas grid,
a fourth step, wherein the hydrocarbons, preferably methane, is taken from the gas grid, and hydrocarbons, preferably methane, are decomposed to hydrogen and granular pyrolytic carbon, a fifth step, wherein the granular pyrolytic carbon produced in the fourth step is transported to a production site of the hydrating gasification, preferably methanation, of step two,
wherein the hydrocarbons, preferably methane, decomposition of step four is conducted in a moving or fixed bed of solid substrates and wherein the produced granular pyrolytic carbon has a bulk density in the range of 0.5 to 1.5 g/cc and has a particle size of 0.1 mm (d10) to 10 mm (d90).

### State of the art

Hydrogen (H₂) produced with a low product carbon footprint (PCF) is both required as a feedstock for the (petro-)chemical industry and as an alternative fuel in the challenge to reduce emission of greenhouse gases such as CO₂. A major route to green H₂ is electrolysis of water utilizing electricity from renewable sources such as solar and wind energy.

Unfortunately, the energy demand of water electrolysis is high and therefore only profitable at locations with low-priced renewable electricity. Such locations are especially wind parks near the coast, offshore or regions with high annual solar radiation.

The locations of hydrogen demand, like chemical production sites, however, are not necessarily located close to the locations with favorable conditions to produce sufficient amounts of green electricity. The chemical production sites are often located far inland. Thus, a hydrogen carrier is needed.

Ammonia and methanol have been proposed as a hydrogen carrier. However, the disadvantages of ammonia are (i) toxicity, dangerous in handling/transport for humans and nature, (ii) low relative energy density and (iii) ammonia production is energy intensive, and cracking is not 100% efficient and may contain impurities in the hydrogen. The disadvantages of methanol are (i) lower hydrogen content than ammonia and thus more volume is needed for same amount of H2, (ii) flammable liquid, dangerous in handling/transport for humans and nature.

WO 2021/239831 discloses a circular carbon process including a methanation step, a methane pyrolysis and using the pyrolytic carbon as a reducing agent in a chemical process producing carbon monoxide that is used for the methanation step. These three process steps are preferably conducted on one side as a joint plant set-up. The benefit of WO 2021/239831 is that carbon can still be used as a reducing agent resulting in carbon oxide, but this carbon oxide is not emitted, but converted to methane resulting in a closed carbon cycle. This carbon cycle includes the following carbon products: methane, solid carbon, and carbon oxide.

DE 10 2013 219 681 describes the use of carbon as an energy carrier transporting hydrogen. A carbon cycle is disclosed containing production of methane by soot (solid carbon black) and hydrogen from water electrolysis, such methane is transported in a gas grid to a production site, where hydrogen is needed for energy generation, at that production site methane is dissociated into hydrogen and soot, finally that soot is transported to the place of the methanation step. As methane dissociation technology, a plasma technology or analogous technologies are disclosed producing soot. Before the transportation or storage of the soot, the soot must be agglomerated, cooled, and dried. Such a plasma soot is not transportable or storable as such, having a nano-particulate structure, a very high specific surface area of up to a few hundred m2/g and thus a very low density. In addition, before the soot can be used in the methanation step, the soot must be dried once again. Therefore, the handling of soot as an energy carrier is impractical and uneconomic due to these several additional conditioning steps. Furthermore, there is a general safety risk when handling nanoparticles, which are prone to dust explosions and pose inhalation hazards. In addition, the plasma technology is a not inherently heat integrated technology and needs a consumer of excess heat.

### Task

It is an object of the present invention to demonstrate a circular carbon process for transporting energy, wherein solid, easy transportable carbon is used as a hydrogen carrier. It is a further object of the present invention to demonstrate a circular carbon process with no need to set up a new infrastructure. It is a further object of the present invention to demonstrate a circular carbon process with less carbon conditioning steps as disclosed in the state of the art. It is a further object of the present invention to demonstrate a circular carbon process including a methane pyrolysis technology fitting to the needs of a transportable or storable carbon and having low operating costs like electricity demand. It is a further object of the present invention to demonstrate a circular carbon process including a methane pyrolysis technology fitting to the needs of the hydrogen downstream processes, preferably a methane pyrolysis technology being heat-integrated, so that the downstream process steps have not to be adjusted when implementing this new hydrogen supply. It is a further object of the present invention to demonstrate a circular carbon process with less safety risks as disclosed in the state of the art.

### Invention

This task is solved by the present invention relating to a circular carbon process for transporting energy comprising:
a first step, wherein hydrogen is produced via water electrolysis,
a second step, wherein the hydrogen produced in the first step and granular pyrolytic carbon produced in the fourth step are reacted to hydrocarbons, preferably methane,
a third step, wherein the hydrocarbons, preferably methane, produced in the second step are fed into a gas grid,
a fourth step, wherein the hydrocarbons, preferably methane, are taken from the gas grid, and hydrocarbons, preferably methane, is decomposed to hydrogen and granular pyrolytic carbon, a fifth step, wherein the granular pyrolytic carbon produced in the fourth step is transported to a production site of the hydrating gasification, preferably methanation, of step two,
wherein the hydrocarbons, preferably methane, decomposition of step four is conducted in a moving or fixed bed of solid substrates and wherein the produced granular pyrolytic carbon has a bulk density in the range of 0.5 to 1.5 g/cc and has a particle size of 0.1 mm (d10) to 10 mm (d90).

The advantage of the present invention is that the carbon obtained from the methane decomposition can directly be transported or stored without any safety risks. On the one hand no additional treatment steps like agglomeration or drying are needed, on the other hand, due to the possibility of heat integration of electrically heated moving or fixed bed reactor, the carbon exits the reactor at moderate temperature.

### Details to the invention

### First step: Water Electrolysis

In the first step, hydrogen is produced via water electrolysis. The water electrolysis of step one can be done with different technologies like alkaline, polymer electrolyte membrane (PEM) or as solid oxide electrolysis cell (SOEC). Typical parameters are described e.g. in (Final Report BMBF funded project: "Studie über die Planung einer Demonstrationsanlage zur Wasserstoff-Kraftstoffgewinnung durch Elektrolyse mit Zwischenspeicherung in Salzkavernen unter Druck PlanDelyKaD". DLR et al., Christoph Noack et al, Stuttgart 5.2.2015).

The water electrolysis is preferably processed by using regenerative energy, e.g., energy from wind parks, solar power plants, or hydroelectric power plants.

The production site of the water electrolysis is preferably close to the site of the generation of regenerative energy. Preferably, the water electrolysis and the generation of regenerative energy are conducted at the same production site.

### Second step: Hydrating Gasification

In the second step, the hydrogen produced via water electrolysis and pyrolytic granular carbon from the methane decomposition of step four are reacted to hydrocarbon, preferably methane. Preferably, granular pyrolytic carbon is stored on the production site of the hydrating gasification, preferably methanation. Preferably the stored granular pyrolytic carbon can be used without any pre-treatment like drying or agglomerating. This hydrating gasification, preferably methanation, can be done with different technologies known in the art:
In one embodiment of the second step, the granular pyrolytic carbon is fed to a gasification plant. There, it is converted in the presence of oxygen and steam into synthesis gas at a temperature in the range from 500° C. to 2000° C. The hydrogen from the water electrolysis is subsequently added to the synthesis gas, with a ratio of carbon monoxide from the synthesis gas to hydrogen optimal for the hydrogenation reaction. The gas mixture then flows into a hydrogenation plant where the synthesis gas is converted into hydrocarbon, preferably methane, over a catalyst in accordance with the reaction equation CO+3H2 -> CH4+H2O.

In another embodiment of the second step, granular pyrolytic carbon, hydrogen and steam are introduced into a fluidized bed of solids. At temperatures in the range from 600-900° C. and a pressure in the range from 20 to 40 bar (2 to 4 MPa), a mixture of hydrocarbon, preferably methane, carbon monoxide and carbon dioxide is formed. In the next reaction stage, the hydrating gasification, preferably methanation, of the remaining carbon oxides is carried out as described above.

In another embodiment of the second step, the granular pyrolytic carbon is reacted with oxygen, preferred the oxygen produced by the water electrolysis, to form carbon dioxide (CO2). The hydrogen produced in the electrolysis is added to the CO2 produced, with a ratio of carbon dioxide to hydrogen which is optimal for the Sabatier reaction. The gas mixture then flows into a hydrogenation plant where it is converted into hydrocarbon, preferably methane, over a catalyst at an elevated pressure in the range from about 5 to 30 bar (0.8 to 3.0 MPa), preferably in the range from about 8 to 10 bar.

### Third step: Feeding methane into a gas grid

The hydrocarbon, preferably methane, formed in the second step is fed into a gas grid. The hydrocarbon, preferably methane, produced by the second step can still contain residues of carbon dioxide. These residues are preferably separated off in a carbon dioxide removal apparatus and optionally fed back to the hydrating gasification, preferably methanation, reaction. The hydrocarbon, preferably methane, is preferably dried and compressed. Furthermore, the hydrogen content of the hydrocarbon, preferably methane, is preferably adjusted so that the proportion of residual hydrogen (H2) which is permissible for introduction into the gas grid is adhered to.

### Fourth Step: Hydrocarbon Decomposition

In the fourth step hydrocarbons, preferably methane, is taken from the gas grid and hydrocarbons, preferably methane, is decomposed to hydrogen and granular pyrolytic carbon.

The methane decomposition of step four is conducted in a moving or fixed bed reactor, wherein the bed contains as substrates preferably carbon materials, metals, ceramics, and a mixture thereof, preferably at temperatures ranging from 500 to 2000°C, preferably ranging from 1000 to 1600°C, even more preferably ranging from 1200 to 1500°C, and at pressures ranging from 1 to 100 bar, preferably from 5 to 50 bar.

The decomposition can either be realized as fixed bed, preferably in a cyclical operation mode, preferably including a production and a regeneration mode as described for example in WO 2018/083002, or in a moving bed as described for example in US 2982622, WO 2019/145279 and WO 2020/200522.

The process of methane decomposition is also referred to as methane pyrolysis since no oxygen is involved. The decomposition can be conducted in different ways known to the persons skilled in the art: catalytically or thermally, and with heat input via plasma, microwave, heated carrier gas, resistance heating, induction, liquid metal processes or autothermal.

The decomposition process is preferably heated electrically, even more preferably by resistive heating (Joule heating) of the substrate material as described for example in US 2982622, WO 2019/145279 and WO 2020/200522.

Preferably the decomposition process is located at an existing chemical production site.

### Preferred Process Conditions: Moving Bed

Preferably the substrate is guided in form of a moving bed through the reaction chamber, with methane and/or other light hydrocarbons being passed advantageously in countercurrent to the substrate.

For this purpose, the reaction chamber is preferably rationally designed as a vertical reactor, which means that the movement of the moving bed is gravity driven. Flow through the moving bed is taking place, advantageously, homogeneously, and uniformly (see for example WO 2013/004398, WO 2019/145279 and WO 2020/200522). Methane and/or other light hydrocarbons are preferably introduced via the bottom of the reactor, preferably having a temperature of 10 to 200°C. The substrate is preferably introduced via the top of the reactor, preferably having a temperature of 10 to 200°C. Hydrogen is preferably taken off via the top of the reactor, preferably having a temperature of 10 to 200°C. The granular pyrolytic carbon is preferably taken off via the bottom of the reactor, preferably having a temperature of 10 to 200°C.

The discharged carbon is preferably at least partly recycled and introduced into the reactor again using it as substrate for the moving bed. As a result, a continuous process of the moving bed is achieved.

The flow velocity of the substrate is advantageously in the range of 0.005 to 0.5 cm/s. The flow velocity of the gas flow is advantageously in the range of 0.025 to 2 m/s.

The gas residence time in the reactor is advantageously between 0.5 and 50 s, preferably between 1 and 20 s. The residence time of the substrate is preferably between 0.5 and 15 hours, preferably between 1 and 10 hours and more preferably between 2 and 8 hours.

### Substrate

The substrate can either be a support substrate in the reactor (a pre-installed part) or a granular material. The preferred substrate is a carbon-containing substrate, for example pyrolytic carbon itself. The particle size of a preferred substrate is in the range of 0.1 to 10 mm, preferably 0.5 to 10 mm, preferably 1 to 8 mm.

Preferably the substrates are carbonaceous materials that are macro-structured carbonaceous materials, wherein the porosity of the carbonaceous material is in the range of 30 to 70 vol.-% and the carbonaceous material contains of a carbon content of 98 wt.-% to 100 wt.-%, preferably 99 wt.-% to 100 wt.-%, even more preferably 99.5 wt.-% to 100 wt.-% and a content of alkaline-earth metals, transition metals and metalloids of 0 and 2 wt.-%, preferably 0 to 1 wt.-%, even more preferably 0 to 0.5 wt.-%, in relation to the total mass of solid carbonaceous material (see WO 2023/057242).

The BET surface area of the substrate is preferably between 0.1 and 100 m2/g, preferably 0.1 and 50 m2/g, in particular 0.1 to 30 m2/g.

Preferably, the density of the substrate is in the range of 1 to 3.5 g/cc, preferably 1.5 to 2.5 g/cc (real density in xylene, ISO 8004). Preferably, the bulk density of the substrate is in the range of 0.5 to 2.5 g/cc, more preferably in the range of 0.5 to 1.5 g/cc.

### Pyrolytic granular carbon

Typically, the density of the granular pyrolytic carbon produced via the described methane decomposition process of step two is in the range of 1.5 to 2.5 g/cc, preferably 1.8 to 2.3 g/cc (real density in xylene, ISO 8004). Typically, the bulk density of the granular pyrolytic carbon is in the range of 0.5 to 1.5 g/cc, more preferably 0.7 to 1.3 g/cc.

Typically, the ash content of the granular pyrolytic carbon composition is in the range of 0.001 to 1 weight-% of the composition, preferably 0.01 to 0.2 weight-%.

Typically, the carbon content of the granular pyrolytic carbon composition is in the range of 98 to 100 weight-%, more preferably 99.5 to 100 weight-%, even more 99.75 to 100 weight-%, even more 99.9 to 100 weight-%.

Typically, the impurities of the granular pyrolytic carbon are: S in the range of 0 to 0.5 weight-%, more preferably 0 to 0.1 weight-%, Fe in the range of 0 to 1000 ppm, preferably 0 to 500 ppm, Ni in the range of 0 to 250 ppm, preferably 0 to 100 ppm, V in the range of 0 to 250 ppm, more preferably 0 to 100 ppm. Na in the range of 0 to 200 ppm, preferably 0 to 100 ppm. Oxygen is in the range of 0 to 100 ppm, preferably below the detection limit.

Typically, 90 weight-% of the carbon of the granular pyrolytic carbon composition is not-functionalized, preferably 95 weight-%, even more preferably 98 weight-%, especially 99 weight-%, wherein carbon functionalization refers to a reaction in which a carbon-carbon bond is broken and replaced by a carbon-X bond (where X is usually hydrogen, oxygen, sulfur, phosphorus, nitrogen, halogens, and/or metals).

Typically, the cation exchange capacity (CEC) of granular pyrolytic carbon is about 0.01 to 1.5 cmol/kg, preferably 0.025 to 0.75 cmol/kg.

Typically, the particle size of the granular pyrolytic carbon directly resulting of the decomposition of gaseous hydrocarbons - without any agglomeration step - is in the range of 0.3 mm (d10) to 8 mm (d90), preferably 0.5 mm (d10) to 5 mm (d90), more preferably 1 mm (d10) to 4 mm (d90).

Typically, the porosity of the granular pyrolytic carbon is between 0% to 15%, preferably 0.2% to 10%, most preferably 0.2% to 5% (Hg porosimetry, DIN66133).

Typically, the specific surface area of the granular pyrolytic carbon measured by Hg porosimetry (DIN66133) is in the range of 0.001 to 10 m2/g, preferably 0.001 to 5 m2/g, even more preferably 0.05 to 2 m2/g.

### Preferred Reactor

Preferably, the reactor for carrying out the methane decomposition, in which hydrogen and granular pyrolytic carbon are produced from hydrocarbons, preferably methane, comprises:
- a reactor surrounding a reactor interior
- the reactor is configured to provide a gravity-driven moving bed in a reaction zone of the reactor interior, which gravity-driven moving bed comprises a large number plurality of solid substrates, wherein the reactor is also configured to guide methane into the reaction zone, wherein, in order to heat methane, the reactor is configured to heat the solid substrates in the reaction zone by generating an electric current in the solid substrates between a pair of first and second electrodes such that, by transferring heat from the solid substrates to methane,
- methane in the reaction zone can be heated to a reaction temperature to produce hydrogen and granular pyrolytic carbon,
- and wherein the reactor interior also comprises a first heat integration zone in which heat from hydrogen produced in the reaction zone can be transferred to solid substrates of the reactor gravity driven moving bed which are to be guided into the reaction zone, and wherein the reactor interior also comprises a second heat integration zone in which heat from solid substrates of the reactor gravity driven moving bed coming from the reaction zone can be transferred to methane in order to preheat methane, wherein said reaction zone is arranged between said pair of first and second electrodes and said first heat integration zone is arranged above said first electrode and said second heat integration zone is arranged below said second electrode.

Preferably, the electrodes comprise a grid or are formed by a grid.

### Preferred Moving Bed Method

Preferably a moving bed technology is used for the methane decomposition in the fourth step comprising:
- a plurality of solid substrates is guided into the first heat integration zone and from there into the reaction zone,
- the solid substrates are heated in the reaction zone,
- the solid substrates are guided from the reaction zone into the second heat integration zone and are withdrawn from the second heat integration zone,
- methane is introduced into the second heat integration zone and from there into the reaction zone, wherein methane in the second heat integration zone is heated against solid substrates coming from the reaction zone, wherein the solid substrates are cooled, and wherein the methane is contacted with the heated solid substrates in the reaction zone, wherein heat from the heated solid substrates is transferred to methane in order to heat methane in the reaction zone, wherein methane is decomposed to hydrogen and granular pyrolytic carbon in the reaction zone,
- hydrogen produced is guided from the reaction zone into the first heat integration zone, wherein the solid substrates in the first heat integration zone are preheated against hydrogen coming from the reaction zone, wherein hydrogen is cooled, and wherein
- hydrogen is withdrawn from the first heat integration zone
- granular pyrolytic carbon produced is deposited on solid substrates and withdrawn with the substrates
- withdrawn substrate is preferably at least partly recycled and introduced into the reactor
- withdrawn hydrogen is preferably at least partly recycled and introduced into the reactor.

### Preferred use of hydrogen

The hydrogen produced by the methane decomposition can either be used energetically, to convert hydrogen into electricity, or materially, to convert hydrogen into chemical products.

Such a converter into electricity preferably includes one or more fuel cells like solid-oxide fuel cells configured to convert hydrogen into electricity and/or one or more gas turbines being connected with electric generators.

Preferably, the pyrolytic hydrogen is used materially. Preferably the hydrogen is used to produce (i) MeOH, (ii) CH4, (iii) NH3, (iv) Syngas, (v) for hydrogenation reaction, (vi) downstream products like aromats, ketons (e.g. cyclododecanon), aldehydes (e.g hexanal), cyclic hydrocarbons (e.g. cyclohexan), amins (e.g. butylamine, propylamine), alcohols (e.g. butanol, heptanol, butandiol, menthol).

Therefore, the present invention optionally comprises a sixth step reacting hydrogen from the fourth step to MeOH, CH4, NH3, Syngas, aromats, ketons (e.g. cyclododecanon), aldehydes (e.g hexanal), cyclic hydrocarbons (e.g. cyclohexan), amins (e.g. butylamine, propylamine), alcohols (e.g. butanol, heptanol, butandiol, menthol).

Preferably, the granular pyrolytic carbon is stored as obtained from the methane decomposition directly, e.g., without any conditioning process step like agglomerating, cooling and/or drying.

### Fifth step: Transport of granular pyrolytic carbon

In the fifth step the granular pyrolytic carbon from the fourth step is transported by a suitable transport means, e.g., via ship, rail, or truck, to the site where the hydrating gasification, preferably methanation, of the second step takes place. Preference is given to high-volume transportation options such as rail and ship.

Preferably, from the store, the granular pyrolytic carbon can be loaded onto a suitable transport means.

Preferably, the granular pyrolytic carbon from the fourth step is transported as obtained from the methane decomposition directly, e.g., without any conditioning process step like agglomerating, cooling and/or drying.

### Advantages of the invention

- Transportability of the granular carbon
- Heat integration of the pyrolysis plant
- Easy transportability of low-emission hydrogen by binding in CH4
- Use of existing infrastructure to transport hydrogen (no new pipelines needed)
- Availability of low-emission hydrogen at locations with little renewable energy

### Figure

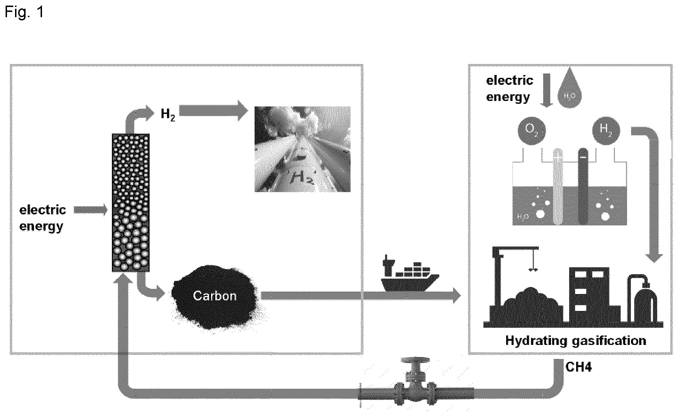

Fig 1: Schematic presentation of the present invention

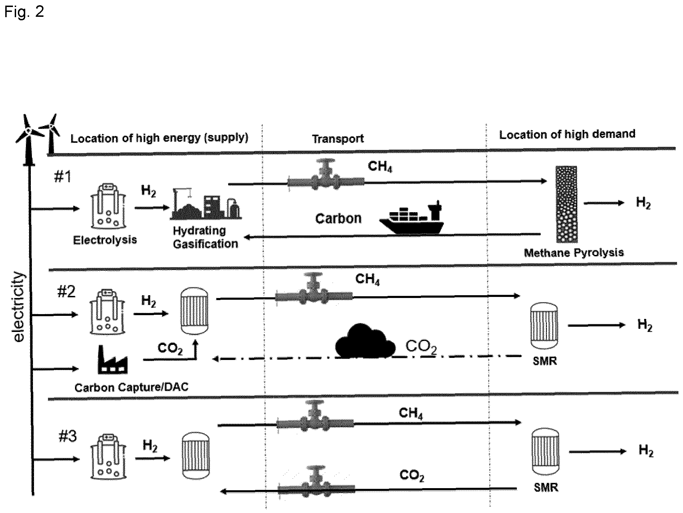

Fig 2: Graphic presentation of the present invention in comparison to Carbon Capture (#2) and Carbon Dioxide Pipelines (#3)

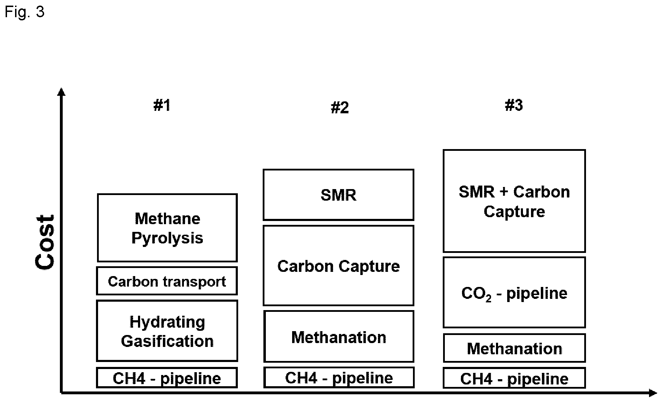

Fig 3: Cost comparison of to Carbon Capture (#2) and Carbon Dioxide Pipelines (#3)

### Examples

### Inventive Example:

Renewable electric energy produced from an offshore wind park is used to electrolyze water into oxygen and hydrogen. Hydrogen is utilized in a methanation process, resulting in gaseous methane as product. Methane is fed into the gas distribution network. At a location inland connected to the gas distribution network, hydrogen is needed as feedstock, therefore, methane is taken from the gas distribution network and utilized in a moving bed methane pyrolysis process. Methane is pyrolyzed at temperatures >1000°C, the energy for the chemical reaction is supplied by renewable electric power taken from the electric grid and provided to the methane by means of resistance heating of granular pyrolytic carbon moving downwards inside the reactor. The methane pyrolysis process then results in 1 kg hydrogen and 3 kg granular pyrolytic carbon per kg of methane. The produced hydrogen is used for its designated purpose while the granular pyrolytic carbon is loaded onto a ship which transports it to the site of the methanation process.

### Comparison to DE 10 2013 219 681:

To store or ship the produced carbon black, DE 10 2013 219 681 includes conditioning steps of cooling, agglomerating and drying of the produced carbon black. The carbon produced in present invention having a density of 1.5 to 2.5 g/cc and particle size of 0.1 mm (d10) to 10 mm (d90) can be shipped or stored directly without any conditioning. The additional costs per ton carbon for conditioning steps of carbon black are estimated to be about 100 to 500 EUR (based on common means of cost estimations for industrial processes).

### Comparison to Carbon Capture (#2) and Carbon Dioxide Pipelines (#3):

To obtain methane in (#2), additional energy is required to capture carbon dioxide from either carbon dioxide emitting processes in the vicinity or from the atmosphere. In a step without methane pyrolysis, methane is converted to hydrogen and carbon dioxide via steam methane reforming. In (#2), the carbon dioxide is emitted to the atmosphere, thus closing the mass balance carbon loop. Present invention describes a carbon cycle not consisting of carbon dioxide emissions to the atmosphere and without costs for carbon capture or direct air capture. Example (#3) avoids carbon dioxide emissions to the atmosphere and does not require carbon capture or direct air capture. However, new infrastructure in the form of carbon dioxide pipelines is required. In contrast, present invention makes use of already existing infrastructure.

## Claims

1. Circular carbon process comprising:
a first step, wherein hydrogen is produced via water electrolysis,
a second step, wherein the hydrogen produced in the first step and granular pyrolytic carbon produced in the fourth step are reacted to hydrocarbons,
a third step, wherein the hydrocarbons produced in the second step are fed into a gas grid,
a fourth step, wherein the hydrocarbons are taken from the gas grid, and hydrocarbons are decomposed to hydrogen and granular pyrolytic carbon,
a fifth step, wherein the granular pyrolytic carbon produced in the fourth step is transported to a production site of the hydrating gasification of step two,
wherein the hydrocarbons decomposition of step four is conducted in a moving or fixed bed of solid substrates and wherein the produced granular pyrolytic carbon has a bulk density in the range of 0.5 to 1.5 g/cc and has a particle size of 0.1 mm (d10) to 10 mm (d90).

2. Process according to claim 1, wherein the specific surface area of the granular pyrolytic carbon measured by Hg porosimetry is in the range of 0.001 to 10 m2/g.

3. Process according to claim 1 or 2, wherein the carbon content of the granular pyrolytic carbon is in the range of 98 to 100 weight-%.

4. Process according to any one of claims 1 to 3, wherein methane is used as hydrocarbon and the hydrating gasification reaction is a methanation reaction.

5. Process according to any one of claims 1 to 4, wherein the decomposition of step four is conducted in an electrically heated moving bed reactor, wherein the bed contains carbon-containing substrates and wherein the substrates are guided in countercurrent to the hydrocarbons.

6. Process according to any one of claims 1 to 5, wherein the carbon-containing substrates have a particle size in the range of 0.1 to 10 mm and a carbon content in the range of 99.5 wt.-% to 100 wt.-% in relation to the total mass of carbon-containing substrates.

7. Process according to any one of claims 1 to 6, wherein the decomposition of step four is conducted at temperatures ranging from 500 to 2000°C and pressures ranging from 1 to 100 bar.

8. Process according to any one of claims 1 to 7, wherein the methane decomposition of step four is conducted in an electrically heated moving bed reactor heated by resistive heating.

9. Process according to any one of claims 1 to 8, wherein the hydrogen is taken off via the top of the decomposition reactor having a temperature of 10 to 200°C and the granular pyrolytic carbon is taken off via the bottom of the decomposition reactor having a temperature of 10 to 200°C.

10. Process according to any one of claims 1 to 9, wherein the granular pyrolytic carbon from the fourth step is transported as directly obtained from the methane decomposition to the production site of the hydrating gasification.

11. Process according to any one of claims 1 to 10, wherein the hydrogen is used to produce ammonia, syngas, aromats, ketons, aldehydes, cyclic hydrocarbons, amins, alcohols.
